(19) Europäisches Patentamt
European Patent Office
Office européen des brevets

(11) **EP 4 560 747 A1**

(12) **EUROPEAN PATENT APPLICATION**
published in accordance with Art. 153(4) EPC


(43) Date of publication:
**28.05.2025 Bulletin 2025/22**

(21) Application number: **23842886.6**

(22) Date of filing: **12.07.2023**

(51) International Patent Classification (IPC):
***H01M 8/1062** (2016.01)* ***H01M 8/10** (2016.01)*
***H01M 8/1025** (2016.01)* ***H01M 8/1039** (2016.01)*
***H01M 8/1041** (2016.01)* ***H01M 8/106** (2016.01)*
***B32B 5/02** (2006.01)* ***B32B 5/28** (2006.01)*
***B32B 7/022** (2019.01)* ***B32B 7/06** (2019.01)*
***B32B 27/00** (2006.01)* ***B32B 27/30** (2006.01)*

(52) Cooperative Patent Classification (CPC):
**H01M 8/10; H01M 8/1025; H01M 8/1039; H01M 8/1041; H01M 8/106; H01M 8/1062;**
B32B 5/02; B32B 5/28; B32B 7/022; B32B 7/06; B32B 27/00; B32B 27/30; Y02E 60/50

(86) International application number:
**PCT/JP2023/025700**

(87) International publication number:
**WO 2024/018962 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.07.2022 JP 2022115790**



(71) Applicant: **AGC INC.**
**Chiyoda-ku,**
**Tokyo 1008405 (JP)**

(72) Inventors:
- **OKUYA, Tamao**
**Tokyo 100-8405 (JP)**
- **HAYABE, Shintaro**
**Tokyo 100-8405 (JP)**

(74) Representative: **Müller-Boré & Partner Patentanwälte PartG mbB**
**Friedenheimer Brücke 21**
**80639 München (DE)**


(54) **LAMINATE AND ROLL BODY**


(57) Provided is a laminate which is excellent in adhesion between a releasing layer and a solid polymer electrolyte membrane and is excellent in unwinding stability when unwound from its wound roll.

A laminate includes: a removable base material having a support and a releasing layer; and a solid polymer electrolyte membrane arranged on the releasing layer of the removable base material, wherein the solid polymer electrolyte membrane includes a fluorinated polymer having ion exchange groups and a woven fabric.


Fig. 1

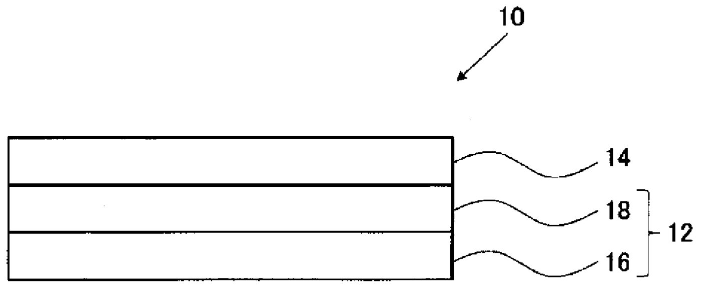





Processed by Luminess, 75001 PARIS (FR)

## Description

TECHNICAL FIELD

The present invention relates to a laminate and a roll body.

BACKGROUND ART

Solid polymer electrolyte membranes are applicable to a variety of uses, and various studies have been conducted on solid polymer electrolyte membranes and their uses. For example, a solid polymer electrolyte membrane is applied to a membrane electrode assembly.

Depending on the intended uses of solid polymer electrolyte membranes, various films are laminated to surfaces of the solid electrolyte membranes. For example, in the case where a solid polymer electrolyte membrane is applied to a membrane electrode assembly, an electrode film (a catalyst layer or an electrode catalyst layer) is laminated to a surface of the solid polymer electrode membrane. Such an electrode film may be formed by a casting method or a coating method.

For example, Patent Document 1 (paragraph [0051]) discloses a technique for applying a catalyst to a surface of an electrolyte sheet in a state that the electrolyte sheet is bonded to a back sheet of polyethylene terephthalate via a releasing layer.

PRIOR ART DOCUMENTS

PATENT DOCUMENTS

Patent Document 1: JP-A-2020-107430

DISCLOSURE OF INVENTION

TECHNICAL PROBLEM

In the case where a removable base material having a support of polyethylene terephthalate or the like and a releasing layer as disclosed in Patent Document 1 is used, good adhesion between the releasing layer and a solid polymer electrolyte membrane is required such that the solid polymer electrolyte membrane arranged on the releasing layer would not be separated during handling.

Further, a laminate including a removable base material and a solid polymer electrolyte membrane is often transported in the form of a wound roll body and used by being unwound from the wound roll body.

The present inventors have found that a laminate including a removable base material as disclosed in Patent Document 1 and a solid polymer electrolyte membrane, when to be unwound from its wound roll body, cannot be stably unwound from the wound roll body. Hereinafter, when a film is stably unwound from its wound roll body, it is also expressed as "excellent in unwinding stability".

The present invention has been made in view of the above circumstances. It is an object of the present invention to provide a laminate which is excellent in adhesion between a releasing layer and a solid polymer electrolyte membrane and is excellent in unwinding stability when unwound from its wound roll body.

It is also an object of the present invention to provide a roll body.

SOLUTION TO PROBLEM

As a result of intensive studies made on the above objects, the present inventors have found that the above objects can be achieved by the following configurations.

(1) A laminate, comprising:

a removable base material having a support and a releasing layer; and
a solid polymer electrolyte membrane arranged on the releasing layer of the removable base material,
wherein the solid polymer electrolyte membrane comprises a fluorinated polymer having ion exchange groups and a woven fabric.

(2) The laminate according to (1), wherein the ion exchange capacity of the fluorinated polymer is 0.90 to 2.00 meq/g dry resin.

(3) The laminate according to (1) or (2), wherein:

the woven fabric comprises yarns A extending in one direction and yarns B extending in a direction substantially orthogonal to the yarns A; and
the aperture ratio of the woven fabric is at least 50%.

(4) The laminate according to (3), wherein the denier count of the yarns A and the denier count of the yarns B are each independently 15 to 50.
(5) The laminate according to (3) or (4), wherein the yarns A and the yarns B are each independently made of at least one material selected from the group consisting of polytetrafluoroethylene, a tetrafluoroethylene-perfluoroalkyl vinyl ether copolymer, polyether ether ketone and polyphenylene sulfide.
(6) The laminate according to any one of (3) to (5), wherein the densities of the yarns A and the yarns B are each independently 70 to 150 yarns/inch.
(7) The laminate according to any one of (1) to (6), wherein the ion exchange groups are sulfonic acid functional groups.
(8) The laminate according to any one of (1) to (7), wherein the fluorinated polymer comprises units based on a fluorinated olefin and units having sulfonic acid functional groups and fluorine atoms.
(9) The laminate according to (8), wherein the fluorinated olefin is a $C_{2-3}$ fluoroolefin having at least one fluorine atom in the molecule.
(10) The laminate according to (8) or (9), wherein the units having sulfonic acid functional groups and fluorine atoms are units represented by the after-mentioned formula (1).
(11) The laminate according to any one of (1) to (10), wherein the elastic modulus of the support at 160°C is higher than the elastic modulus of the releasing layer at 160°C.
(12) The laminate according to any one of (1) to (11), wherein the elastic modulus of the releasing layer at 160°C is at most 1 MPa.
(13) The laminate according to any one of (1) to (12), wherein:

the woven fabric comprises yarns A extending in one direction and yarns B extending in a direction substantially orthogonal to the yarns A; and
the average maximum membrane thickness $TA_{AVE}$ and the average minimum membrane thickness $TB_{AVE}$ of the solid polymer electrolyte membrane satisfy the relationship of the after-mentioned formula (X),
where, when the maximum membrane thickness TA and the minimum membrane thickness TB of the solid polymer electrolyte membrane are measured for each of ten different cross sections of the solid polymer electrolyte membrane as taken in a direction parallel to the direction in which the yarns A in the solid polymer electrolyte membrane extend and at a midpoint between the yarns A, and
when the maximum membrane thickness TA and the minimum membrane thickness TB of the solid polymer electrolyte membrane are measured for each of ten different cross sections of the solid polymer electrolyte membrane as taken in a direction parallel to the direction in which the yarns B in the solid polymer electrolyte membrane extend and at a midpoint between the yarns B,
the average maximum membrane thickness $TA_{AVE}$ is the arithmetically average of the twenty measured values of TA, and the average minimum membrane thickness $TB_{AVE}$ is the arithmetic average of the twenty measured values of TB.

(14) A roll body obtained by winding a laminate as defined in any one of (1) to (13).

## ADVANTAGEOUS EFFECTS OF INVENTION

According to the present invention, it is possible to obtain a laminate which is excellent in adhesion between a releasing layer and a solid polymer electrolyte membrane and is excellent in unwinding stability when unwound from its wound roll body.
According to the present invention, it is also possible to obtain a roll body.

## BRIEF DESCRIPTION OF DRAWINGS

Fig. 1 is a cross-sectional view illustrating an example of a laminate of the present invention.
Fig. 2 is a cross-sectional view illustrating another example of a laminate of the present invention.

Fig. 3 is a cross-sectional view illustrating an example of a solid polymer electrolyte membrane, as cut in a direction parallel to a direction in which yarns A extend.

Fig. 4 is a cross-sectional view illustrating an example of a solid polymer electrolyte membrane, as cut in a direction parallel to a direction in which yarns B extend.

Fig. 5 is a schematic plan view illustrating an example of a woven fabric included in a solid polymer electrolyte membrane, as viewed toward a thickness direction of the solid polymer electrolyte membrane.

DESCRIPTION OF EMBODIMENTS

The following definitions of terms apply throughout the present specification and claims unless otherwise specified.

An "ion exchange group" refers to a group in which some of ions contained can be exchanged to other ions, as exemplified by e.g. the following sulfonic acid functional group or carboxylic acid functional group.

A "sulfonic acid functional group" refers to a sulfonic acid group ($-SO_3H$) or a sulfonate group ($-SO_3M^2$ where $M^2$ is an alkali metal or a quaternary ammonium cation).

A "carboxylic acid functional group" refers to a carboxylic acid group (-COOH) or a carboxylate group ($-COOM^1$ where $M^1$ is an alkali metal or a quaternary ammonium cation).

A "precursor membrane" refers to a membrane containing a polymer having groups convertible to ion exchange groups.

A "group convertible to an ion exchange group" refers to a group that can be converted to an ion exchange group by treatment such as hydrolysis treatment, acidification treatment or the like.

A "group convertible to a sulfonic acid functional group" refers to a group that can be converted to a sulfonic acid functional group by treatment such as a hydrolysis treatment, acidification treatment or the like.

A "unit" in a polymer refers to an atomic group derived from a single monomer molecule, which is formed by polymerization reaction of the monomer. The unit may be an atomic group formed directly by polymerization reaction or may be an atomic group in which a part of the atomic group is converted to another structure by treating the polymer obtained by polymerization reaction.

A numerical range expressed using "to" means a range including numerical values described before and after "to" as the lower and upper limits.

[Laminate]

A laminate of the present invention includes: a removable base material having a support and a releasing layer; and a solid polymer electrolyte membrane arranged on the releasing layer of the removable base material, wherein the solid polymer electrolyte membrane includes a fluorinated polymer having ion exchange groups and a woven fabric.

The laminate of the present invention is excellent in adhesion between the releasing layer and the solid polymer electrolyte membrane and is excellent in unwinding stability when unwound from its wound roll body. The reason for this has not been clarified in detail, but is assumed as follows.

In the laminate of the present invention, the woven fabric is included in the solid polymer electrolyte membrane. Due to the presence of the woven fabric, a surface of the solid polymer electrolyte membrane has a fine uneven structure formed thereon. It is assumed that, when the uneven structure is formed on the releasing layer-side surface of the solid polymer electrolyte membrane, the material of the releasing layer enters the concave portions of the uneven structure on the releasing layer-side surface of the solid polymer electrolyte membrane to produce an anchoring effect whereby the adhesion between the releasing layer and the solid polymer electrolyte membrane is improved.

Further, when the laminate is wound into a roll body, the uneven structure formed on the surface of the solid polymer electrolyte membrane opposite the releasing layer-side surface is brought into contact with the support-side surface of the removable base material. It is assumed that, by such an uneven structure, so-called blocking is suppressed whereby the laminate can be stably unwound from the roll body.

It is assumed that, when a surface of the support opposite to the releasing layer of the removable base material is subjected to matte finish, the laminate can also be stably unwound from the roll body.

It is also assumed that, when the laminate has a highly peelable fluorine film or polyethylene film bonded to the surface of the support opposite to the releasing layer of the removable base material, blocking is suppressed whereby the laminate can be more stably unwound from the roll body. It is further assumed that, when a surface of the bonded fluorine film or polyethylene film opposite to the removable base material is subjected to matte finish, the laminate can also be stably unwound from the roll body as above.

Fig. 1 is a cross-sectional view illustrating an example of the laminate of the present invention. A laminate 10 includes a removable base material 12 and a solid polymer electrolyte membrane 14. The removable base material 12 has a support 16 and a releasing layer 18. In the removable base material 12, the releasing layer 18 is disposed on a side closer

to and facing the solid polymer electrolyte membrane 14. The solid polymer electrolyte membrane 14 is disposed on and in contact with the releasing layer 18.

Hereinafter, the respective members of the laminate will be described in detail below.

[Removable base material]

The removable base material is a base material that supports the solid polymer electrolyte membrane and can be removed.

The removable base material has a support and a releasing layer.

The respective members of the removable base material will be now described in detail below.

(Support)

The support is a member for supporting the releasing layer.

As specific examples of the support, a resin plate, a glass plate and a metal plate may be mentioned.

In the case where the support is a resin plate, examples of the material contained in the support include resins such as polyester, polyolefin, polyamide, polyimide, polycarbonate, polyphenylene ether, polyphenylene sulfide, cellulose derivatives and the like. Among others, polyester or polyimide is preferred from the viewpoint of heat resistance and flexibility. More preferred is polyester.

As the polyester, polyethylene terephthalate and polyethylene naphthalate may be mentioned.

In the case where the support is a resin plate, the resin content of the support is preferably at least 80 mass%, more preferably at least 90 mass%, still more preferably at least 95 mass%, to the total mass of the support. The upper limit of the resin content is 100 mass%.

The thickness of the support is preferably 5 to 188 μm, more preferably 25 to 100 μm. When the thickness of the support is in the above-mentioned range, the support is good in balance between handling ease and reduced thickness and is suitably applicable to a roll-to-roll method involving heat treatment.

The above-mentioned thickness of the support is an average thickness value as obtained by measuring the thickness of the support at arbitrary five or more locations and arithmetically averaging these measurements.

The elastic modulus of the support at 160°C is preferably 5 to 100 MPa, more preferably 20 to 60 MPa. When the thickness of the support is in the above-mentioned range, the support is good in balance between dimensional stability and reduced thickness and is suitably applicable to a roll-to-roll method involving heat treatment.

As a method for measuring the elastic modulus of the support, a method based on JIS K7161 may be mentioned.

(Releasing layer)

The releasing layer is a layer arranged in contact with the polymer solid electrolyte membrane described later.

Examples of the material contained in the releasing layer include resins such as polyolefin. Polyethylene or polypropylene is particularly preferred from the viewpoint of good balance between adhesion to and removability from the solid polymer electrolyte membrane.

The weight average molecular weight of the polyethylene is preferably 20,000 to 7,000,000, more preferably 20,000 to 300,000.

The weight average molecular weight of the polypropylene is preferably 40,000 to 300,000, more preferably 40,000 to 200,000.

In the case where a resin is contained in the releasing layer, the resin content of the releasing layer is preferably at least 80 mass%, more preferably at least 90 mass%, still more preferably at least 95 mass%, to the total mass of the releasing layer. The upper limit of the resin content is 100 mass%.

The thickness of the releasing layer is preferably 5 to 200 μm, more preferably 25 to 100 μm. When the thickness of the releasing layer is in the above-mentioned range, the releasing layer is good in balance between adhesion to the solid polymer electrolyte membrane and reduced thickness.

The above-mentioned thickness of the releasing layer is an average thickness value as obtained by measuring the thickness of the releasing layer at arbitrary five or more locations and arithmetically averaging these measurements.

The elastic modulus of the releasing layer at 160°C is preferably at most 1 MPa, more preferably at most 0.5 MPa. The lower limit of the elastic modulus is not particularly limited. In the present specification, in the case where a specimen for elastic modulus measurement melts off during being held by a gripping holder of a tensile testing machine in an environment of 160°C so that the measurement itself cannot be made, the elastic modulus of the specimen is indicated as 0 MPa.

It is preferable that the elastic modulus of the support at 160°C is higher than the elastic modulus of the releasing layer at 160°C. For example, the elastic modulus of the support at 160°C is preferably higher by 1 to 80 MPa, more

preferably higher by 5 to 50 MPa, than the elastic modulus of the releasing layer at 160°C. When the elastic modulus of the support at 160°C is higher than the elastic modulus of the releasing layer at 160°C, the laminate is high in dimensional stability when applied to a roll-to-roll method involving heat treatment.

The measurement method of the elastic modulus of the releasing method is the same as the measurement method of the elastic modulus of the support.

(Other layer)

The removable base material may include any layer other than the support and the releasing layer. For example, the removable base material may have an adhesive layer arranged between the support and the releasing layer for improved adhesion of these layers.

As the adhesive layer, an adhesive layer using an adhesive or a pressure sensitive adhesive layer using a pressure sensitive adhesive may be mentioned.

(Production method of removable base material)

As a method for producing the removable base material, a method may be mentioned in which the releasing layer is formed on the support by applying, to the support, a releasing layer forming composition containing a solvent and a resin capable of forming a releasing layer, and then, performing drying treatment and curing treatment as needed. A method may also be mentioned in which the releasing layer is formed on the support by coating a surface of the support with a molten resin. Further, a dry lamination method of, after applying an adhesive solution to the support, drying the resulting support and laminating the releasing layer onto the dried support may be mentioned.

[Solid polymer electrolyte membrane]

The solid polymer electrolyte membrane includes a fluorinated polymer having ion exchange groups (hereinafter also referred to as a "fluorinated polymer (I)") and a woven fabric.

Hereinafter, the materials contained in the polymer electrolyte membrane will be first described in detail below; and then, the properties of the solid polymer electrolyte membrane will be described in detail below.

(Fluorinated polymer (I))

The ion exchange capacity of the fluorinated polymer (I) is preferably at least 0.90 meq/g dry resin, more preferably at least 1.10 meq/g dry resin, still more preferably at least 1.15 meq/g dry resin, particularly preferably at least 1.20 meq/g dry resin, most preferably at least 1.25 meq/g dry resin, from the viewpoint that, when the solid polymer electrolyte membrane is applied to a membrane electrode assembly, the electrolysis voltage can be more reduced.

The upper limit of the ion exchange capacity of the fluorinated polymer (I) is preferably at most 2.00 meq/g dry resin, more preferably at most 1.50 meq/g dry resin, still more preferably at most 1.43 meq/g dry resin, from the viewpoint of better properties of the solid polymer electrolyte membrane.

The fluorinated polymer (I) used in the solid polymer electrolyte membrane may be one type or may be two or more types in laminate form or mixture form.

Although the solid polymer electrolyte membrane may contain any polymer other than the fluorinated polymer (I) (hereinafter also referred to as the "other polymer"), it is preferable that the polymer in the solid polymer electrolyte membrane is substantially composed of the fluorinated polymer (I). Substantially composed of a fluorinated polymer (I) is meant that the content of the fluorinated polymer (I) is at least 95 mass% to the total mass of polymers in the solid polymer electrolyte membrane. The upper limit of the content of the fluorinated polymer (I) may be 100 mass% to the total mass of polymers in the solid polymer electrolyte membrane.

As examples of the other polymer, there may be mentioned one or more polyazole compounds selected from the group consisting of a polymer of a heterocyclic compound containing one or more nitrogen atoms in the ring and a polymer of a heterocyclic compound containing one or more nitrogen atoms and oxygen and/or sulfur atoms in the ring.

Specific examples of such polyazole compounds include polyimidazole compounds, polybenzimidazole compounds, polybenzobisimidazole compounds, polybenzoxazole compounds, polyoxazole compounds, polythiazole compounds and polybenzothiazole compounds.

From the viewpoint of oxidation resistance of the solid polymer electrolyte membrane, a polyphenylene sulfide resin and a polyphenylene ether resin may also be mentioned as the other polymer.

The fluorinated polymer (I) has ion exchange groups. As specific examples of the ion exchange groups, sulfonic acid functional groups and carboxylic acid functional groups may be mentioned. Sulfonic acid functional groups are preferred from the viewpoint that, when the solid polymer electrolyte membrane is applied to a membrane electrode

assembly, the electrolysis voltage can be more reduced.

In the following, detailed descriptions will be made mainly on embodiments of a fluorinated polymer having sulfonic acid functional groups (hereinafter also referred to as a "fluorinated polymer (S)").

The fluorinated polymer (S) preferably contains units based on a fluorinated olefin and units having sulfonic acid functional groups and fluorine atoms.

As the fluorinated olefin, for example, a $C_{2-3}$ fluoroolefin having at least one fluorine atom in the molecule may be mentioned. Specific examples of the fluoroolefin include tetrafluoroethylene (hereinafter also referred to as "TFE"), chlorotrifluoroethylene, vinylidene fluoride, vinyl fluoride and hexafluoropropylene. Among others, TFE is preferred from the viewpoint that: it is excellent in monomer production cost and high in reactivity with other monomers; and the fluorinated polymer (S) obtainable therefrom is excellent in properties.

As the fluorinated olefin, one type may be used alone, or two or more types may be used in combination.

As the units having sulfonic acid functional groups and fluorine atoms, units represented by the formula (1) are preferred.

Formula (1): $-[CF_2-CF(-L-(SO_3M)_n)]-$

Here, L is an n+1-valent perfluorohydrocarbon group which may contain an etheric oxygen atom.

The etheric oxygen atom may be located at a terminal end of the perfluorohydrocarbon group or may be located between carbon atoms in the perfluorohydrocarbon group.

The number of carbon atoms in the n+1-valent perfluorohydrocarbon group is preferably at least 1, more preferably at least 2, and is preferably at most 20, more preferably at most 10.

As L, preferred is an n+1-valent perfluoroaliphatic hydrocarbon group which may contain an etheric oxygen atom. More preferred is a divalent perfluoroalkylene group which may contain an etheric atom oxygen atom as an embodiment of n = 1, or a trivalent perfluoroaliphatic hydrocarbon group which may contain an etheric oxygen atom as an embodiment of n = 2.

The above divalent perfluoroalkylene group may be linear or branched.

M is a hydrogen atom, an alkali metal or a quaternary ammonium cation.

n is 1 or 2. When n is 2, the plurality of M may be the same or different.

As the units represented by the formula (1), units represented by the formula (1-1), units represented by the formula (1-2), units represented by the formula (1-3) or units represented by the formula (1-4) are preferred.

Formula (1-1): $-[CF_2-CF(-O-R^{f1}-SO_3M)]-$

Formula (1-2): $-[CF_2-CF(-R^{f1}-SO_3M)]-$

Formula (1-3):

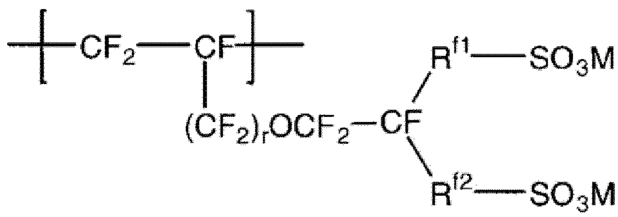

Formula (1-4):

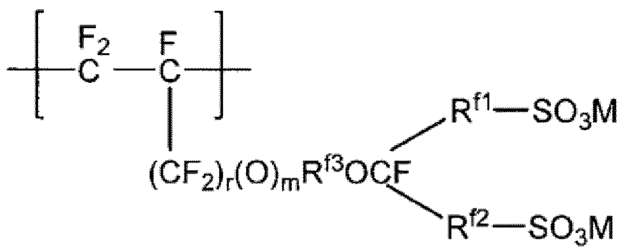

$R^{f1}$ is a perfluoroalkylene group which may contain an oxygen atom between carbon atoms. The number of carbon atoms in the perfluoroalkylene group is preferably at least 1, more preferably at least 2, and is preferably at most 20, more preferably at most 10.

$R^{f2}$ is a single bond or a perfluoroalkylene group which may contain an oxygen atom between carbon atoms. The number of carbon atoms in the perfluoroalkylene group is preferably at least 1, more preferably at least 2, and is preferably at most 20, more preferably at most 10.

$R^{f3}$ is a single bond or a perfluoroalkylene group which may contain an oxygen atom between carbon atoms. The number of carbon atoms in the perfluoroalkylene group is preferably at least 1, more preferably at least 2, and is preferably at most 20, more preferably at most 10.

r is 0 or 1.

m is 0 or 1.

M is a hydrogen atom, an alkali metal or a quaternary ammonium cation.

As the units represented by the formula (1-1) and the units represented by the formula (1-2), units represented by the formula (1-5) are more preferred.

Formula (1-5): $-[CF_2-CF(-(CF_2)_x-(OCF_2CFY)_y-O-(CF_2)_z-SO_3M)]-$

x is 0 or 1, y is an integer of 0 to 2, z is an integer of 1 to 4, Y is F or $CF_3$, and M is as described above.

As specific examples of the units represented by the formula (1-1), the following may be mentioned. In the formulae, w is an integer of 1 to 8, and x is an integer of 1 to 5. The definition of M in the formulae is as described above.

$-[CF_2-CF(-O-(CF_2)_w-SO_3M)]-$

$-[CF_2-CF(-O-CF_2CF(CF_3)-O-(CF_2)_w-SO_3M)]-$

$-[CF_2-CF(-(O-CF_2CF(CF_3))_x-SO_3M)]-$

As specific examples of the units represented by the formula (1-2), the following may be mentioned. In the formulae, w is an integer of 1 to 8. The definition of M in the formulae is as described above.

$-[CF_2-CF(-(CF_2)_w-SO_3M)]-$

$-[CF_2-CF(-CF_2-O-(CF_2)_w-SO_3M)]-$

As the units represented by the formula (1-3), units represented by the formula (1-3-1) are more preferred. The definition of M in the formula is as described above.

Formula (1-3-1):

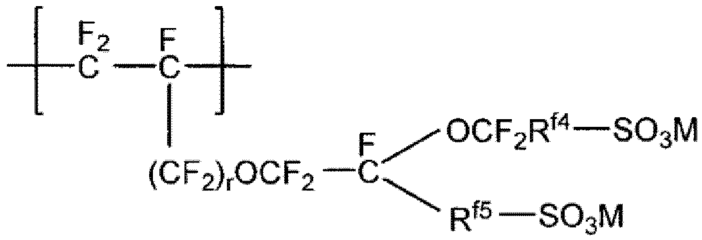

$R^{f4}$ is a $C_{1-6}$ linear perfluoroalkylene group, and $R^{f5}$ is a single bond or a $C_{1-6}$ linear perfluoroalkylene group which may contain an oxygen atom between carbon atoms. The definitions of r and M in the formula are as described above.

As specific examples of the units represented by the formula (1-3-1), the following units may be mentioned.

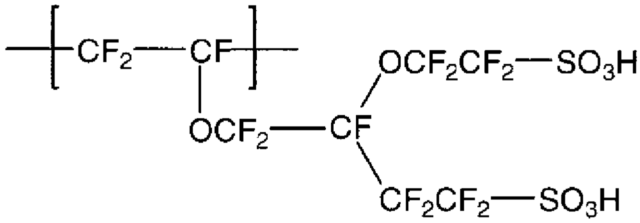

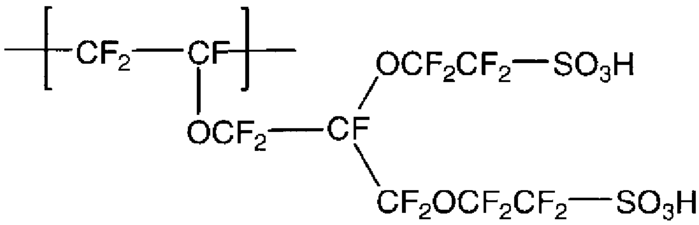

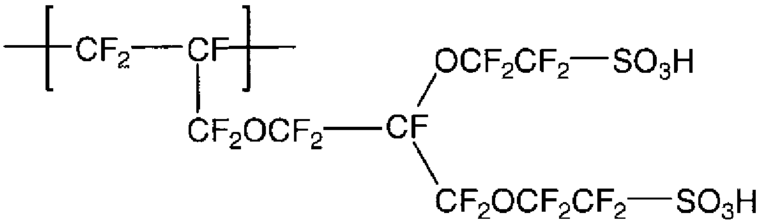

As the units represented by the formula (1-4), units represented by the formula (1-4-1) are more preferred. The definitions of $R^{f1}$, $R^{f2}$ and M in the formula are as described above.

Formula (1-4-1):

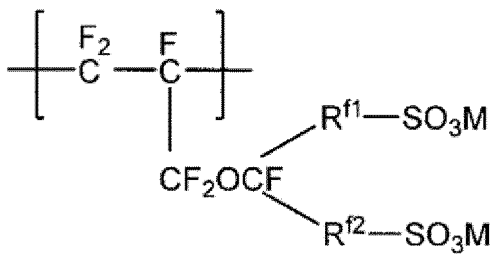

As a specific example of the units represented by the formula (1-4-1), the following may be mentioned.

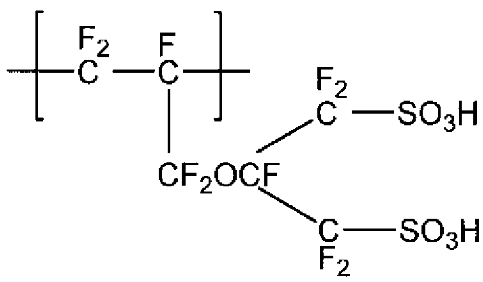

As the units having sulfonic acid type functional groups and fluorine atoms, one type may be used alone, or two or more types may be used in combination.

The fluorinated polymer (S) may contain units based on any other monomer (hereinafter also referred to as the "other monomer"), other than the units based on a fluorinated olefin and the units having sulfonic acid functional groups and fluorine atoms.

As specific examples of the other monomer, $CF_2=CFR^{f6}$ (where $R^{f6}$ is a $C_{2-10}$ perfluoroalkyl group), $CF_2=CF-OR^{f7}$ (where $R^{f7}$ is a $C_{1-10}$ perfluoroalkyl group) and $CF_2=CFO(CF_2)_vCF=CF_2$ (where v is an integer of 1 to 3) may be

mentioned.

From the viewpoint of maintaining ion exchange performance, the content of the units based on the other monomer is preferably at most 30 mass% to all units in the fluorinated polymer (S).

(Woven fabric)

The aperture ratio of the woven fabric is preferably at least 50.0%, more preferably at least 55.0%, still more preferably at least 60.0%, particularly preferably at least 70.0%, from the viewpoint that, when the solid polymer electrolyte membrane is applied to a membrane electrode assembly, the electrolysis voltage can be more reduced.

The upper limit of the aperture ratio of the woven fabric is preferably at most 90.0%, more preferably at most 80.0%, from the viewpoint of higher strength of the solid polymer electrolyte membrane.

The aperture ratio of the woven fabric is calculated by the following formula (ε) based on the average diameter R1 of yarns and the average spacing P1 between adjacent yarns (hereinafter also referred to as the "pitch P1").

Here, the average diameter R1 of yarns means the arithmetic average value of the diameters of 10 different yarns selected arbitrarily based on a magnified image (e.g. 100 magnifications) of the woven fabric surface obtained by using a microscope. Further, the pitch P1 means the arithmetic average value of 10 spacing points at different locations selected arbitrarily based on a magnified image (e.g. 100 magnifications) of the woven fabric surface obtained by using a microscope.

$$\text{Aperture Ratio (\%) of Woven Fabric} = [P1/(P1 + R1)]^2 \times 100 \qquad (\varepsilon)$$

The denier counts of yarns A and B constituting the woven fabric are each independently preferably at least 2.0, more preferably at least 10.0, still more preferably at least 15.0, from the viewpoint of higher strength and dimensional stability of the solid polymer electrolyte membrane.

The upper limits of the denier counts of yarns A and B constituting the woven fabric are each independently preferably at most 60.0, more preferably at most 50.0, still more preferably at most 20.0, from the viewpoint that, when the solid polymer electrolyte membrane is applied to a membrane electrode assembly, the electrolysis voltage can be more reduced.

Here, the denier means a value that expresses the mass of 9000 m of yarns in grams (g/9000m).

The densities of the yarns A and B are each independently preferably at least 50 yarns/inch (19.7 yarns/cm), more preferably at least 70 yarns/inch (27.6 yarns/cm), still more preferably at least 90 yarns/inch (35.4 yarns/cm), from the viewpoint of high strength and dimensional stability of the solid polymer electrolyte membrane. From the viewpoint that, when the solid polymer electrolyte membrane is applied to a membrane electrode assembly, the electrolysis voltage can be more reduced, the densities of the yarns A and B are each independently preferably at most 200 yarns/inch (78.7 yarns/cm), more preferably at most 150 yarns/inch (59.1 yarns/cm), still more preferably at most 100 yarns/inch (39.4 yarns/cm).

The yarns A and the yarns B can be composed of either a monofilament consisting of one filament or a multifilament consisting of two or more filaments. Preferred is a monofilament.

From the viewpoint of higher yarn durability, the yarns A and the yarns B are each independently preferably made of at least one material selected from the group consisting of polytetrafluoroethylene (hereinafter also referred to as "PTFE"), a tetrafluoroethylene-perfluoroalkyl vinyl ether copolymer (hereinafter also referred to as "PFA"), polyether ether ketone (hereinafter also referred to as "PEEK") and polyphenylene sulfide (hereinafter also referred to as "PPS").

The yarns A and the yarns B are preferably in the form of slit yarns from the viewpoint of higher yarn durability and strength.

In the woven fabric, the yarns A and the yarns B are preferably substantially orthogonal to each other. Substantially orthogonal means that the angle between the yarn A and the yarn B is 90 ± 10 degrees.

The yarns A can be warp yarns or weft yarns of the woven fabric, but when the yarns A are weft yarns, the yarns B are warp yarns, and when the yarns A are warp yarns, the yarns B are weft yarns.

In the case where the material constituting the woven fabric is PTFE, the fabric weight of the woven fabric is preferably 20.0 to 40.0 g/$m^2$, more preferably 30.0 to 40.0 g/$m^2$, from the viewpoint of good balance between strength and handling ease of the solid polymer electrolyte membrane.

In the case where the material constituting the woven fabric is PFA, the fabric weight of the woven fabric is preferably 10.0 to 30.0 g/$m^2$, more preferably 10.0 to 20.0 g/$m^2$, from the viewpoint of good balance between strength and handling ease of the solid polymer electrolyte membrane.

In the case where the material constituting the woven fabric is PEEK, the fabric weight of the woven fabric is preferably 5.0 to 40.0 g/$m^2$, more preferably 5.0 to 30.0 g/$m^2$, from the viewpoint of good balance between strength and handling ease of the solid polymer electrolyte membrane.

In the case where the material constituting the woven fabric is PPS, the fabric weight of the woven fabric is preferably 5.0 to 40.0 g/$m^2$, more preferably 5.0 to 30.0 g/$m^2$, from the viewpoint of good balance between strength and handling ease of the solid polymer electrolyte membrane.

(Properties of polymer solid electrolyte membrane)

The solid polymer electrolyte membrane may have a single-layer structure or a multilayer structure. Preferred is a single-layer structure.

In the case of a multilayer structure, for example, an embodiment may be mentioned in which a plurality of layers containing the fluorinated polymer (I) and having different ion exchange capacities are laminated together.

A releasing layer-side surface of the solid polymer electrolyte membrane preferably has an uneven structure formed thereon. When the uneven structure is formed on the releasing layer-side surface of the solid polymer electrolyte, the material of the releasing layer enters the concave portions of the uneven structure whereby the adhesion between the solid polymer electrolyte membrane and the releasing layer is improved.

The uneven structure is formed by incorporating the woven fabric in the solid polymer electrolyte membrane. For example, the height of the convex portions of the uneven structure can be adjusted by adjusting the membrane thickness of the solid polymer electrolyte membrane.

A surface of the solid polymer electrolyte membrane opposite the releasing layer-side surface also preferably has an uneven structure formed thereon. When the laminate is wound into a roll body, the uneven structure formed on the surface of the solid polymer electrolyte membrane opposite the releasing layer-side surface allows smooth sliding between the surface of the solid polymer electrolyte membrane opposite the releasing layer-side surface and the surface of the removable base material opposite the releasing layer whereby the laminate can be stably unwound from the roll body.

The uneven structure is formed by incorporating the woven fabric in the solid polymer electrolyte membrane. For example, the height of the convex portions of the uneven structure can be adjusted by adjusting the membrane thickness of the solid polymer electrolyte membrane.

As a technique of laminating the woven fabric to a precursor membrane for the solid polymer electrolyte membrane during the process of producing the solid polymer electrolyte membrane, flat pressing and hot roll pressing may be mentioned. In the case of continuous lamination by hot roll pressing, the woven fabric and the precursor membrane may be fed with the application of back tension for the purpose of stable conveyance of the woven fabric and the precursor membrane. When the back tension is applied to the woven fabric, the back tension acts on the yarns extending in MD (machine direction) such that the yarns extending in MD are pulled and stretched. In addition, the yarns extending in TD (traverse direction) are more three-dimensionally deformed as compared to the case where no back tension is applied. When the precursor membrane is laminated to the woven fabric in this state, the shape of the more three-dimensionally deformed yarns extending in TD is maintained. In other words, the height of the convex portions of the uneven structure can also be adjusted by adjusting the back tension applied during the hot roll pressing.

In the case where the woven fabric in the solid polymer electrolyte membrane is constituted by yarns A extending in one direction and yarns B extending in a direction substantially orthogonal to the yarns A, it is preferable that the average maximum membrane thickness $TA_{AVE}$ and the average minimum membrane thickness $TB_{AVE}$ of the solid polymer electrolyte membrane satisfy the relationship of the following formula (X).

Formula (X): $$0.5\ \mu m \leq (TA_{AVE} - TB_{AVE})/2$$

Here, when the maximum membrane thickness TA and the minimum membrane thickness TB of the solid polymer electrolyte membrane are measured for each of ten different cross sections of the solid polymer electrolyte membrane as taken in a direction parallel to the direction in which the yarns A in the solid polymer electrolyte membrane extend and through a midpoint between the yarns A, and when the maximum membrane thickness TA and the minimum membrane thickness TB of the solid polymer electrolyte membrane are measured for each of ten different cross sections of the solid polymer electrolyte membrane as taken in a direction parallel to the direction in which the yarns B in the solid polymer electrolyte membrane extend and through a midpoint between the yarns B, the average maximum membrane thickness $TA_{AVE}$ is the arithmetically average of the twenty measured values of TA, and the average minimum membrane thickness $TB_{AVE}$ is the arithmetically average of the twenty measured values of TB.

In other words, a half value ($(TA_{AVE} - TB_{AVE})/2$) of the difference between the average maximum membrane thickness $TA_{AVE}$ and the average minimum membrane thickness $TB_{AVE}$ ($TA_{AVE} - TB_{AVE}$) is preferably at least 0.5 μm.

When the value $(TA_{AVE} - TB_{AVE})/2$ is at least 0.5 μm, the laminate is better in adhesion between the releasing layer and the solid polymer electrolyte membrane or is better in unwinding stability when unwound from its wound roll body.

Among others, the value $(TA_{AVE} - TB_{AVE})/2$ is more preferably at least 1.0 μm, still more preferably at least 2.0 μm, yet more preferably at least 3.0 μm, particularly preferably at least 5.0 μm, most preferably at least 10.0 μm. The upper

limit of the value $(TA_{AVE} - TB_{AVE})/2$ is not particularly limited, but is often at most 30.0 μm, more often at most 20.0 μm.

The calculation method of the value $(TA_{AVE} - TB_{AVE})/2$ will be now described below with reference to the drawings.

Fig. 3 is a cross-sectional view illustrating an example of the solid polymer electrolyte membrane in the laminate of the present invention, as cut in a direction parallel to the direction in which the yarns A extend, and more specifically, illustrating an exposed cross section of the solid polymer electrolyte membrane as taken along a A-A' line of Fig. 4 as described later. In the cross section of the solid polymer electrolyte membrane 14 as shown in Fig. 3, an electrolyte 20 containing the fluorinated polymer (I) and yarns 22a, 22b and 22c disposed in the electrolyte 20 are exposed. The yarns 22a, 22b and 22c corresponds to the yarns B constituting the woven fabric 22.

Fig. 4 is a cross-sectional view illustrating an example of the solid polymer electrolyte membrane in the laminate of the present invention as cut in a direction parallel to the direction in which the yarns B extend, and more specifically illustrating an exposed cross section of the solid polymer electrolyte membrane as taken along a line B-B' of Fig. 5 as described later. In the cross section of the solid polymer electrolyte membrane 14 as shown in Fig. 4, an electrolyte 20 containing the fluorinated polymer (I) and yarns 22A, 22B and 22C disposed in the electrolyte 20 are exposed. The yarns 22A, 22B and 22C correspond to the yarns A constituting the woven fabric 22.

Fig. 5 is a schematic plan view of the woven fabric 22 in the solid polymer electrolyte membrane 14 as viewed toward the membrane thickness direction. As shown in Fig. 5, the woven fabric 22 includes: yarns 22A, 22B and 22C which correspond to the yarns A; and yarns 22a, 22b and 22c which correspond to the yarns B substantially orthogonal to the yarns A.

First, the maximum membrane thickness TA and the minimum membrane thickness TB of the solid polymer electrolyte membrane are measured for each of ten different cross sections of the solid polymer electrolyte membrane as taken in a direction parallel to the direction in which the yarns A in the solid polymer electrolyte membrane extend and through a midpoint between the yarns A.

More specifically, in the example of Fig. 5, the solid polymer electrolyte membrane 10 is cut along a A-A' line located at a midpoint between the yarns 22A and 22B corresponding to the yarns A. With this, a cross section of the solid polymer electrolyte membrane 14 as shown in Fig. 3 is exposed. Similarly, the solid polymer electrolyte membrane 10 is cut at a position other than the midpoint between the yarns 22A and 22B (e.g. cut at a midpoint between the yarns 22B and 22C) so that a cross section of the solid polymer electrolyte membrane 14 is exposed. After obtaining ten different cross sections in this manner, the maximum membrane thickness TA and the minimum membrane thickness TB are measured for each cross section.

Further, the maximum membrane thickness TA and the minimum membrane thickness TB of the solid polymer electrolyte membrane are measured for each of ten different cross sections of the solid polymer electrolyte membrane as taken in a direction parallel to the direction in which the yarns B in the solid polymer electrolyte membrane extend and at a midpoint between the yarns B.

More specifically, in the example of Fig. 5, the solid polymer electrolyte membrane 10 is cut along a B-B' line located at a midpoint between the yarns 22a and 22b corresponding to the yarns B. With this, a cross section of the solid polymer electrolyte membrane 10 as shown in Fig. 4 is exposed. Similarly, the solid polymer electrolyte membrane 10 is cut at a position other than the midpoint between the yarns 22a and 22b (e.g. cut at a midpoint between the yarns 22b and 22c) so that a cross section of the solid polymer electrolyte membrane 10 is exposed. After obtaining ten different cross sections in this manner, the maximum membrane thickness TA and the minimum membrane thickness TB are measured for each cross section.

Next, the average maximum membrane thickness $TA_{AVE}$ is obtained by arithmetically averaging the twenty measured values of TA, and the average minimum membrane thickness $TB_{AVE}$ is obtained by arithmetically averaging the twenty measured value of TB. A difference between the average maximum membrane thickness $TA_{AVE}$ and the average minimum membrane thickness $TB_{AVE}$, divided by 2, is taken as $(TA_{AVE} - TB_{AVE})/2$.

The method of adjusting the value $(TA_{AVE} - TB_{AVE})/2$ may be, but is not limited to, e.g. a method in which, during the process of producing the solid polymer electrolyte membrane, a precursor membrane for the solid polymer electrolyte membrane is sandwiched between the after-described low melting point films and then subjected to hot pressing. In this method, the low melting point films are deformed to follow the surface shape of the precursor membrane so that there can be obtained the solid polymer electrolyte membrane having on a surface thereof an uneven structure in which: the portions where the yarns A and B constituting the woven fabric are present are convex portions; and the portions where no yarns A and B are present are concave portions.

Further, it is possible by adjusting the back tension applied during the hot roll pressing to not only adjust the height of the convex portions of the uneven structure as mentioned above but also adjust the value $(TA_{AVE} - TB_{AVE})/2$.

Here, for membrane thickness measurement of the solid polymer electrolyte membrane, a sample having the solid polymer electrolyte membrane removed from the laminate and dried at 90°C for 2 hours is used.

The maximum membrane thickness TA and the minimum membrane thickness TB are measured using a magnified image (e.g. 100 magnifications) of a cross section of the solid polymer electrolyte membrane taken by an optical

microscope (product name "BX-51" manufactured by Olympus Corporation).

The average maximum membrane thickness $TA_{AVE}$ of the solid polymer electrolyte membrane is preferably 60 to 250 μm, more preferably 60 to 200 μm, still more preferably 60 to 140 μm, particularly preferably 60 to 120 μm, most preferably 60 to 100 μm, from the viewpoint that, when the solid polymer electrolyte membrane is applied to a membrane electrode assembly, the electrolysis voltage can be more reduced.

The average maximum membrane thickness $TB_{AVE}$ of the solid polymer electrolyte membrane is preferably 30 to 220 μm, more preferably 30 to 200 μm, still more preferably 30 to 130 μm, yet more preferably 30 to 100 μm, particularly preferably 30 to 80 μm, most preferably 30 to 70 μm, from the viewpoint that a membrane electrode assembly with the solid polymer electrolyte membrane can be more improved in strength.

(Production method of solid polymer electrolyte membrane)

As a production method of the solid polymer electrolyte membrane, a method may be mentioned in which a membrane having a precursor membrane containing a polymer (also referred to as a "fluorinated polymer (I')") of a fluorinated monomer having a group convertible to an ion exchange group (also referred to as a "fluorinated monomer (I')") and a woven fabric (hereinafter also referred to as a "precursor membrane (I')") is produced, and then the groups convertible to ion exchange groups in the precursor membrane (I') are converted to ion exchange groups.

As a suitable embodiment of the production method of the precursor membrane (I'), a method may be mentioned in which a laminate having the fluorinated polymer (I') placed on both sides of the woven fabric is sandwiched between transfer base materials such as low melting point films with a melting point of 70 to 180°C and then subjected to hot pressing.

As specific examples of the low melting point films, polyethylene films, polypropylene films and polystyrene films may be mentioned.

The form of the woven fabric is as described above.

As the fluorinated polymer (I'), preferred is a polymer (also referred to as a "fluorinated polymer (S')") of a monomer having a group convertible to a sulfonic acid functional group (hereinafter also referred to as a "fluorinated monomer (S')"). Particularly preferred is a fluorinated polymer (S') obtained by copolymerization of a fluorinated olefin and a monomer having a fluorine atom and a group convertible to a sulfonic acid functional group.

In the following, the fluorinated polymer (S') will be described in detail below.

As a copolymerization method for formation of the fluorinated polymer (S'), a known method such as solution polymerization, suspension polymerization, emulsion polymerization or the like may be employed.

As the fluorinated olefin, those exemplified above may be mentioned. TFE is preferred from the viewpoint that: it is excellent in monomer production cost and reactivity with other monomers; and the fluorinated polymer (S) obtainable therefrom is excellent in properties.

As the fluorinated olefin, one type may be used alone, or two or more types may be used in combination.

As the fluorinated monomer (S'), a compound having at least one fluorine atom in the molecule, having an ethylenic double bond and having a group convertible to a sulfonic acid functional group may be mentioned.

As the fluorinated monomer (S'), a compound represented by the formula (2) is preferred from the viewpoint that: it is excellent in monomer production cost and reactivity with other monomers; and the fluorinated polymer (S) obtainable therefrom is excellent in properties.

Formula (2): $CF_2=CF-L-(A)_n$

The definitions of L and n in the formula (2) are as described above.

A is a group convertible to a sulfonic acid functional group. The group convertible to a sulfonic acid functional group is preferably a functional group that can be converted to a sulfonic acid functional group by hydrolysis. Specific examples of the group convertible to a sulfonic acid functional group include $-SO_2F$, $-SO_2Cl$ and $-SO_2Br$.

As the compound represented by the formula (2), a compound represented by the formula (2-1), a compound represented by the formula (2-2), a compound represented by the formula (2-3) or a compound represented by the formula (2-4) is preferred.

Formula (2-1): $CF_2=CF-O-R^{f1}-A$

Formula (2-2): $CF_2=CF-R^{f1}-A$

Formula (2-3):

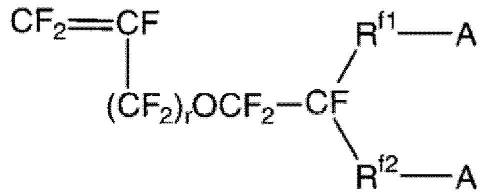

The definitions of $R^{f1}$, $R^{f2}$, r and A in the formulae are as described above.

Formula (2-4):

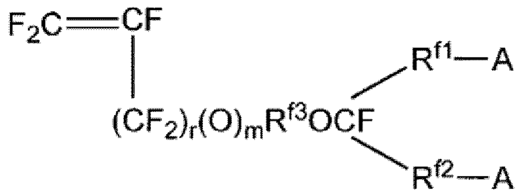

The definitions of $R^{f1}$, $R^{f2}$, $R^{f3}$, r, m and A in the formula are as described above.

As the compound represented by the formula (2-1) and the compound represented by the formula (2-1), a compound represented by the formula (2-5) is preferred.

Formula (2-5): $CF_2$=CF-$(CF_2)_x$-$(OCF_2CFY)_y$-O-$(CF_2)_z$-$SO_2F$

The definitions of x, y, z and Y in the formula are as described above.

As specific examples of the compound represented by the formula (2-1), the following compounds may be mentioned. In the formulas, w is an integer of 1 to 8, and x is an integer of 1 to 5.

$CF_2$=CF-O-$(CF_2)_w$-$SO_2F$

$CF_2$=CF-O-$CF_2CF(CF_3)$-O-$(CF_2)_w$-$SO_2F$

$CF_2$=CF-[O-$CF_2CF(CF_3)$]$_x$-$SO_2F$

As specific examples of the compound represented by the formula (2-2), the following compounds may be mentioned. In the formulas, w is an integer of 1 to 8.

$CF_2$=CF-$(CF_2)_w$-$SO_2F$

$CF_2$=CF-$CF_2$-O-$(CF_2)_w$-$SO_2F$

As the compound represented by the formula (2-3), a compound represented by the formula (2-3-1) is preferred.

Formula (2-3-1):

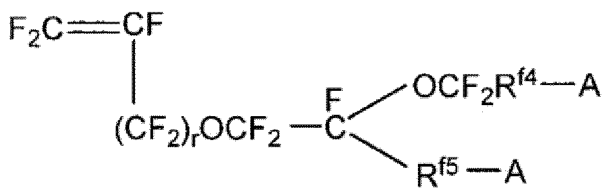

The definitions of $R^{f4}$, $R^{f5}$, r and A in the formula are as described above.

As specific examples of the compound represented by the formula (2-3-1), the following compounds may be mentioned.

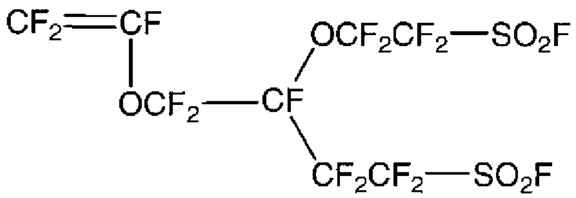

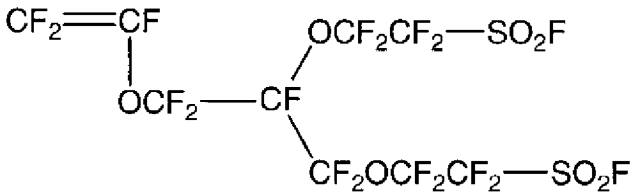

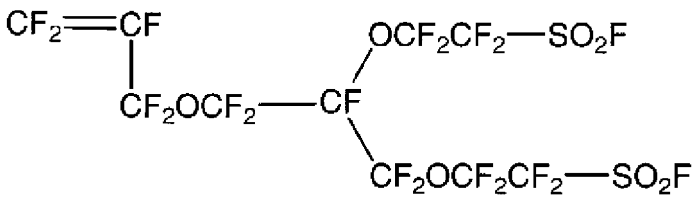

As the compound represented by the formula (2-4), a compound represented by the formula (2-4-1) is preferred.

Formula (2-4-1):

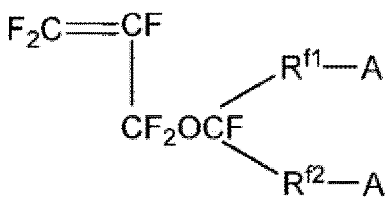

The definitions of $R^{f1}$, $R^{f2}$and A in the formula are as described above.

As specific examples of the compound represented by the formula (2-4-1), the following compound may be mentioned.

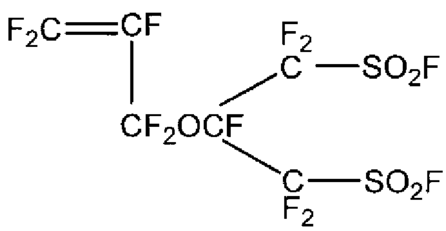

As the fluorinated monomer (S'), one type may be used alone, or two or more types may be used in combination.

For the production of the fluorinated polymer (S'), any other monomer may be used in addition to the fluorinated olefin and the fluorinated monomer (S'). As such other monomer, those exemplified above may be mentioned.

The ion exchange capacity of the fluorinated polymer (I') can be adjusted by changing the content of groups convertible to sulfonic acid functional groups in the fluorinated polymer (I').

As a specific example of the method for producing the precursor membrane, an extrusion method may be mentioned. More specifically, the precursor membrane can be produced by forming membranes (I') of the fluorinated polymer (I'), arranging the membrane (I'), the woven fabric and the membrane (I') in this order and laminating these layers together with the use of a laminating roll or a vacuum laminating device.

As a specific example of the method for converting the groups convertible to ion exchange groups in the precursor membrane to ion exchange groups, a method of performing treatment such as hydrolysis treatment or acidification treatment on the precursor membrane may be mentioned.

Among others, preferred is contact treatment of the precursor membrane with an alkaline aqueous solution.

As a specific example of the method for contact treatment of the precursor membrane with the alkaline aqueous solution, immersion of the precursor membrane in the alkaline aqueous solution or spray-coating of a surface of the precursor membrane with the alkaline aqueous solution may be mentioned.

The temperature of the alkaline aqueous solution is preferably 30 to 100°C, more preferably 40 to 100°C. The contact time of the precursor membrane and the alkaline aqueous solution is preferably 3 to 150 minutes, more preferably 5 to 50 minutes.

The alkaline aqueous solution preferably contains an alkali metal hydroxide, a water-soluble organic solvent and water.

Specific examples of the alkali metal hydroxide include sodium hydroxide and potassium hydroxide.

In the present specification, the water-soluble organic solvent refers to an organic solvent easily soluble in water. Specifically, preferred is an organic solvent of which the solubility in 1000 ml of water (20°C) is at least 0.1 g, and an organic solvent of which the solubility is at least 0.5 g is more preferred. The water-soluble organic solvent preferably contains at least one kind selected from the group consisting of an aprotic organic solvent, an alcohol and an amino alcohol, and more preferably contains an aprotic organic solvent.

As the water-soluble organic solvent, one type may be used alone, or two or more types may be used in combination.

Specific examples of the aprotic organic solvent include dimethyl sulfoxide, N,N-dimethylformamide, N,N-dimethylacetamide, N-methyl-2-pyrrolidone and N-ethyl-2-pyrrolidone. Preferred is dimethyl sulfoxide.

Specific examples of the alcohol include methanol, ethanol, isopropanol, butanol, methoxyethoxyethanol, butoxyethanol, butylcarbitol, hexyloxyethanol, octanol, 1-methoxy-2-propanol and ethylene glycol.

Specific examples of the amino alcohol include ethanolamine, N-methyl ethanolamine, N-ethyl ethanolamine, 1-amino-2-propanol, 1-amino-3-propanol, 2-aminoethoxyethanol, 2-aminothioethoxyethanol and 2-amino-2-methyl-1-propanol.

The concentration of the alkali metal hydroxide in the alkaline aqueous solution is preferably 1 to 60 mass%, more preferably 3 to 55 mass%.

The content of the water-soluble organic solvent in the alkaline aqueous solution is preferably 1 to 60 mass%, more preferably 3 to 55 mass%.

The concentration of water in the alkaline aqueous solution is preferably 39 to 80 mass%.

After the contact treatment of the precursor membrane with the alkaline aqueous solution, any treatment for removing the alkaline aqueous solution may be performed. As the method for removing the alkaline aqueous solution, for example, a method may be mentioned in which the precursor membrane contact-treated with the alkaline aqueous solution is washed with water.

After the contact treatment of the precursor membrane with the alkaline aqueous solution, the thus-obtained membrane may be further treated by contact with an acidic aqueous solution to convert the ion exchange groups to acidic type.

As a specific example of the method for contact treatment of the precursor membrane with the acidic aqueous solution, immersion of the precursor membrane in the acidic aqueous solution or spray-coating of a surface of the precursor membrane with the acidic aqueous solution may be mentioned.

The acidic aqueous solution preferably contains an acid component and water.

Specific examples of the acid component include hydrochloric acid and sulfuric acid.

[Production method of laminate]

As a production method of the laminate, a method may be mentioned in which the removable base material and the solid polymer electrolyte membrane are thermally press-bonded together such that the solid polymer electrolyte membrane faces the releasing layer of the removable base material. The thermal press-bonding may be performed by a roll-to-roll method using a hot roll press machine.

In the case where the thermal press-bonding is performed using a hot roll press machine, the roll temperature is preferably 60 to 200°C, more preferably 90 to 170°C.

[Roll body]

A roll body is obtained by winding the laminate of the present invention into a roll shape. The laminate, when in the form of a roll body, is easy to handle such as transport.

As the time of winding the laminate, the laminate may be wound around a roll core.

[Applications]

The laminate of the present invention is applicable to a variety of uses. For example, the laminate can be used for production of a membrane electrode assembly. More specifically, the membrane electrode assembly can be produced by forming a catalyst layer on a surface of the solid polymer electrolyte membrane of the laminate, removing the removable base material and further forming a catalyst layer on an exposed surface of the solid polymer electrolyte membrane.

As a method for forming the catalyst layer, a method may be mentioned in which a coating liquid for catalyst layer formation is applied to a predetermined area and subjected to drying as needed. The coating liquid for catalyst layer formation is a liquid in which a polymer having ion exchange groups and a catalyst are dispersed in a dispersion medium.

The obtained membrane electrode assembly can be used in a water electrolyzer (more specifically, a solid polymer type water electrolyzer). Furthermore, the membrane electrode assembly can also be used as a diaphragm in an electrolytic hydrogenation apparatus for an aromatic compound (e.g. toluene).

EXAMPLES

Now, the present invention will be described in further detail with reference to Examples. Ex. 1 to 10 correspond to Examples of the present invention, and Ex. 11 corresponds to Comparative Example. However, the present invention is by no means restricted to these Examples.

[Membrane thickness]

The average maximum membrane thickness $TA_{AVE}$, the average minimum membrane thickness $TB_{AVE}$ and the value $(TA_{AVE} - TB_{AVE})/2$ of a solid polymer electrolyte membrane were determined in accordance with the methods described in the above section for description of the solid polymer electrolyte membrane.

[Ion exchange capacity of fluorinated polymer]

A fluorinated polymer was placed for 24 hours in a glove box with a flow of dry nitrogen therethrough, and the dry mass of the fluorinated polymer was measured. Then, the fluorinated polymer was immersed in a 2 mol/L sodium chloride solution at 60°C for 1 hour. After washing the fluorinated polymer with ultrapure water, the fluorinated polymer was taken out. The ion exchange capacity (meq/g dry resin) of the fluorinated polymer was determined by titrating, with a 0.1 mol/L sodium hydroxide solution, the solution in which the fluorinated polymer had been immersed.

[Fabric weight of woven fabric]

A woven raw fabric used was cut into a 20 × 20 cm size, and the mass of the cut fabric was measured. The above measurement was conducted five times. Based on the average value of these measurements, the fabric weight (g/$m^2$) of the woven fabric was determined.

[Densities of warp yarns and weft yarns of woven fabric]

The densities of warp yarns and weft yarns constituting a woven fabric were determined according to the following method. For each of the warp yarns and the weft yarns, the average value of five measurements of the length of 10 yarns was calculated, as the density (yarns/inch), from an image observed by an optical microscope.

[Aperture ratio of woven fabric]

The aperture ratio of a woven fabric was determined, in accordance with the method described in the above section for description of the woven fabric, by using a sample obtained by cutting the woven raw fabric into a 20 × 20 cm size.

[Denier counts of warp yarns and weft yarns of woven fabric]

The denier counts of warp yarns and weft yarns constituting a woven fabric were determined in accordance with the following method. Five aperture areas were randomly selected from the woven fabric. The aperture ratio was respectively calculated from images of the selected aperture areas observed by an optical microscope. The average value of these calculations was used as the aperture ratio.

[Evaluation of adhesion]

The peeling force between a removable base material and a solid polymer electrolyte membrane was measured, in accordance with JIS Z0237, by a universal material testing instrument RTF-2430 (manufactured by A&D Company, Ltd.) under the conditions of a peeling angle of 180 degrees, a peeling speed of 300 mm/min, a specimen width of 25 mm and a specimen length of 50 mm in an atmosphere of a temperature of 23°C and a relative humidity of 50%. The measured peeling force was evaluated according to the following criteria.

○: The peeling force was 0.1 to 3 N/25mm.
△: The peeling force was higher than 3 N/25mm.
×: The peeling force was lower than 0.1 N/25mm.

The peeling force is preferably at least 0.1 N/25mm from the viewpoint that separation of the solid polymer electrolyte membrane from the removable base material is unlikely to occur.
Further, the peeling force is preferably at most 3 N/25mm from the viewpoint that too high peeling force can lead to a high possibility of local breakage in the solid polymer electrolyte membrane at the removal of the removable base material from the solid polymer electrolyte membrane.

[Evaluation of unwinding stability]

Around a cylindrical ABS core (manufactured by Showa Marutsutsu Company, Ltd., outer diameter: 88.5 mm, inner diameter: 76.5 mm, width: 300 mm), 0.6 m of a laminate obtained in each Ex., having a width of 280 mm, was wound. A biaxially oriented polyester film (Melinex (registered tradename) manufactured by DuPont Teijin Films, thickness: 0.1 mm, width: 280 mm) was joined at an end thereof to an end of the laminate and then further wound over the laminate to obtain a roll body of 100 m winding. In other words, winding of total 100 m of the laminate was simulated by winding the biaxially oriented polyester film. The joining between the end of the laminate and the end of the biaxially oriented polyester film was done by using a heat-resistant polyimide tape (5412, manufactured by 3M Company, width: 19 mm). The winding tension was based on 30 N/full width. After the obtained roll body was stored in a suspended state for one month, the biaxially oriented polyester film was unwound from the roll body. At the time when the laminate was unwound from the roll body, the unwinding stability was evaluated according to the following criteria.

○: The laminate was unwound without separation between the solid polymer electrolyte membrane and the removable base material.
×: Local separation occurred between the solid polymer electrolyte membrane and the removable base material, and the unwinding of the laminate was not stable.

As described later, the above evaluation was performed by preparing two types of samples, in one of which the laminate was wound around the ABS core with the solid polymer electrolyte membrane outside the removable base material, and in the other of which the laminate was wound around the ABS core with the solid polymer electrolyte membrane inside the removable base material.

[Production of fluorinated polymer (S'-1)]

A fluorinated polymer (S'-1) (ion exchange capacity: 1.25 meg/g dry resin) was produced by copolymerization of $CF_2=CF_2$ and a monomer (Y) represented by the following formula (Y).

$$CF_2=CF\text{-}O\text{-}CF_2CF(CF_3)\text{-}O\text{-}CF_2CF_2\text{-}SO_2F \qquad (Y)$$

[Production of fluorinated polymer (S'-2)]

A fluorinated polymer (S'-2) (ion exchange capacity: 1.00 meg/g dry resin) was produced by copolymerization of $CF_2=CF_2$ and a monomer (Y) represented by the above formula (Y).
Here, the ion exchange capacity indicated in the above section [Production of fluorinated polymer (S'-1)] represents the ion exchange capacity of the fluorinated polymer (S'-1) after hydrolyzed by the procedure described below.
Likewise, the ion exchange capacity indicated in the above section [Production of fluorinated polymer (S'-2)] represents the ion exchange capacity of the fluorinated polymer (S'-2) after hydrolyzed by the procedure described below.

[Production of film-attached base material Y1]

The fluorinated polymer (S'-1) was deposited by a melt-extrusion method on a base material made of a linear low-density polyethylene (LLDPE) film (melting point: 110 to 120°C, thickness: 0.1 mm), thereby obtaining a film-attached base material Y1 in which a film $\alpha$1 of the fluorinated polymer (S'-1) (film thickness: 30 $\mu$m) was formed on the base material.

[Production of film-attached base material Y2]

The fluorinated polymer (S'-1) was deposited by a melt-extrusion method on a base material made of a biaxially oriented polyester film (Melinex (registered tradename) manufactured by DuPont Teijin Films, thickness: 0.1 mm, width: 400 mm), thereby obtaining a film-attached base material Y2 in which a film $\alpha$2 of the fluorinated polymer (S'-1) (film thickness: 60 $\mu$m) was formed on the base material.

[Production of film-attached base material Y3]

The fluorinated polymer (S'-2) was deposited by a melt-extrusion method on a base material made of a biaxially oriented polyester film (Melinex (registered tradename) manufactured by DuPont Teijin Films, thickness: 0.1 mm, width: 400 mm), thereby obtaining a film-attached base material Y3 in which a film $\alpha$3 of the fluorinated polymer (S'-2) (film thickness: 60 $\mu$m) was formed on the base material.

[Production of film-attached base material Y4]

The fluorinated polymer (S'-2) was deposited by a melt-extrusion method on a base material made of a biaxially oriented polyester film (Melinex (registered tradename) manufactured by DuPont Teijin Films, thickness: 0.1 mm, width: 400 mm), thereby obtaining a film-attached base material Y4 in which a film $\alpha$4 of the fluorinated polymer (S'-2) (film thickness: 80 $\mu$m) was formed on the base material.

[Production of film-attached base material Y5]

The fluorinated polymer (S'-2) was deposited by a melt-extrusion method on a base material made of a biaxially oriented polyester film (Melinex (registered tradename) manufactured by DuPont Teijin Films, thickness: 0.1 mm, width: 400 mm), thereby obtaining a film-attached base material Y5 in which a film $\alpha$5 of the fluorinated polymer (S'-2) (film thickness: 115 $\mu$m) was formed on the base material.

[Production of film-attached base material Y6]

The fluorinated polymer (S'-1) was deposited by a melt-extrusion method on a base material made of a biaxially oriented polyester film (Melinex (registered tradename) manufactured by DuPont Teijin Films, thickness: 0.1 mm, width: 400 mm), thereby obtaining a film-attached base material Y6 in which a film $\alpha$6 of the fluorinated polymer (S'-1) (film thickness: 130 $\mu$m) was formed on the base material.

[Production of woven fabrics]

A woven fabric A1 was produced by plain weaving with 18.6 denier yarns made of PFA as warp yarns and weft yarns such that the density of the PFA yarns became 90 yarns/inch. The fabric weight of the woven fabric A1 was 16.3 g/$m^2$, and the aperture ratio of the woven fabric A1 was 74.3%.

Here, the warp yarns and the weft yarns were in the form of slit yarns.

Further, the yarns A and the yarns B were each composed of a monofilament.

A woven fabric A2 was produced in the same manner as the production of the woven fabric A1, except that the types and deniers of the material constituting the warp yarns and the weft yarns and the density, fabric weight and aperture ratio of the woven fabric were changed to those shown in Table 1.

[Production of removable base material 1]

An adhesive was prepared by mixing LX-75A (manufactured by DIC Graphics Corporation) as a base agent, KW-75 (manufactured by DIC Graphics Corporation) as a curing agent and ethyl acetate as a diluent at a mixing ratio of 60 parts by mass:10 parts by mass:60 parts by mass.

A biaxially oriented polyester film (Melinex (registered tradename) manufactured by DuPont Teijin Films,

thickness: 50 μm, elastic modulus at 160°C: 40 MPa) was provided as a support, and the above-prepared adhesive was applied to the support such that the amount of the solute became 2 g/m$^2$.

After forming the adhesive layer by evaporating the solvent of the adhesive in a drying furnace, a releasing layer was formed by laminating a LDPE film (AJ-1, manufactured by Tamapoly CO., LTD., thickness: 50 μm, elastic modulus at 160°C: 0 MPa) to the adhesive layer with the use of a dry laminating machine, whereby a removable base material 1 was obtained. Here, the LDPE film was oriented to have a corona-treated surface thereof laminated to the adhesive layer formed on the support.

[Production of removable base material 2]

A removable base material 2 was produced according to the same procedure as the production procedure of the removable base material 1, except that a LLDPE film (low-density polyethylene film (M-6, manufactured by Tamapoly CO., LTD.), thickness: 100 μm, elastic modulus at 160°C: 0 MPa) was used in place of the LDPE film (AJ-1, manufactured by Tamapoly CO., LTD.)

[Production of removable base material 3]

A removable base material 3 was produced according to the same procedure as that for production of the removable base material 1, by providing a ETFE film (tetrafluoroethylene-ethylene copolymer, single-side matte finished film (50HK, manufactured by AGC INC.), thickness: 50 μm, elastic modulus at 160°C: 48 MPa) on a surface of the support of the removable base material 2 to which the releasing layer had not been laminated such that the ETFE film and the removable base material 2 were laminated to each other via the adhesive layer. Here, the ETFE film was oriented to have a corona-treated mirror finished surface thereof laminated to the adhesive layer formed on the support.

[Production of removable base material 4]

A removable base material 4 was produced according to the same procedure as the production procedure of the removable base material 1, by providing a biaxially oriented polyester film (Melinex (registered tradename) manufactured by DuPont Teijin Films, thickness: 188 μm, elastic modulus at 160°C: 40 MPa) as a support and a LLDPE film (low-density polyethylene film (M-6, manufactured by Tamapoly CO., LTD.), thickness: 60 μm, elastic modulus at 160°C: 0 MPa) as a releasing layer, further providing a ETFE film (tetrafluoroethylene-ethylene copolymer, single side matte finished film (30 HK, manufactured by AGC INC.), thickness: 30 μm, elastic modulus at 160°C: 48 MPa) as a unwinding stability improving layer on a surface of the support on which the releasing layer had not been laminated and, after laminating these layers together via the adhesive layers, performing 42-dyne corona treatment on an LLDPE surface of the releasing layer. Here, the ETFE film was oriented to have a corona-treated mirror finished surface thereof laminated to the adhesive layer formed on the support.

[Ex. 1]

The film-attached base material Y1, the woven fabric A1 and the film-attached base material Y1 was stacked in this order. Here, the film-attached base material Y1 was arranged such that the film α1 of the film-attached base material Y1 was in contact with the woven fabric A1.

After these stacked layers were thermally press-bonded together for 10 minutes by a flat press machine at a temperature of 160°C under a surface pressure of 30 MPa/m$^2$, the base materials on both sides were peeled off at a temperature of 50°C to obtain a precursor membrane.

The precursor membrane was immersed in a solution of dimethyl sulfoxide/potassium hydroxide/water = 30/5.5/64.5 (mass ratio) at 95°C for 30 minutes to convert the groups convertible to sulfonic acid functional groups in the precursor membrane by hydrolysis to K-type sulfonic acid functional groups, followed by washing with water. The obtained membrane was immersed in 1M sulfuric acid to convert the terminal groups from K-type to H-type, and then, dried to obtain a solid polymer electrolyte membrane 1.

The solid polymer electrolyte membrane 1 had an average maximum membrane thickness $TA_{AVE}$ of 91 μm, an average minimum membrane thickness $TB_{AVE}$ of 60 μm, and a value $(TA_{AVE} - TB_{AVE})/2$ of 15.5 μm.

Using a hot roll press machine, the above-prepared removable base material 1 and the above-prepared solid polymer electrolyte membrane 1 were fed in between a metal roll and a rubber roll and thereby thermally press-bonded to each other to obtain a laminate 1. In the laminate 1 as a carrier film, the support, the releasing layer and the solid polymer electrolyte membrane 1 were laminated in this order.

Here, the surface pressure of the rubber roll in press contact with the metal roll was 200 N/cm; the temperature of the metal roll and the rubber roll was 160°C; and the feeding speed was 10 cm/min.

[Ex. 2]

A laminate 2 was obtained according to the same procedure as in Ex. 1, except that the removable base material 2 was used in place of the removable base material 1.

[Ex. 3]

A laminate 3 was obtained according to the same procedure as in Ex. 1, except that the removable base material 3 was used in place of the removable base material 1.

[Ex. 4]

A laminate 4 was obtained according to the same procedure as in Ex. 1, except that: the removable base material 3 was used in place of the removable base material 1; and the woven fabric A2 was used in place of the woven fabric A1.

[Ex. 5]

A laminate 5 was obtained according to the same procedure as in Ex. 1, except that: the film-attached base material Y2 was used in place of the film-attached base material Y1; and the removable base material 3 was used in place of the removable base material 1.

[Ex. 6]

A laminate 6 was obtained according to the same procedure as in Ex. 1, except that: the film-attached base material Y2 was used in place of the film-attached base material Y1; the removable base material 3 was used in place of the removable base material 1; and the woven fabric A2 was used in place of the woven fabric A1.

[Ex. 7]

A laminate 7 was obtained according to the same procedure as in Ex. 1, except that: the film-attached base material Y3 was used in place of the film-attached base material Y1; and the removable base material 3 was used in place of the removable base material 1.

[Ex. 8]

A laminate 8 was obtained by the same procedure as in Ex. 1, except that: the film-attached base material Y4 was used in place of the film-attached base material Y1; the removable base material 3 was used in place of the removable base material 1; and the woven fabric A2 was used in place of the woven fabric A1.

[Ex. 9]

A laminate 9 was obtained by the same procedure as in Ex. 1, except that: the film-attached base material Y5 was used in place of the film-attached base material Y1; the removable base material 3 was used in place of the removable base material 1; and the woven fabric A2 was used in place of the woven fabric A1.

[Ex. 10]

A laminate 10 was obtained by the same procedure as in Ex. 1, except that: the film-attached base material Y2 was used in place of the film-attached base material Y1; the removable base material 4 was used in place of the removable base material 1; the metal roll temperature of the hot roll pressing machine was set to 130°C; and the rubber roll temperature of the hot roll pressing machine was set to 90°C.

[Ex. 11]

A laminate 10 was obtained by the same procedure as in Ex. 1, except that: a solid polymer electrolyte membrane 10 was produced using, as a precursor membrane, the film obtained by peeling off the base material from the film-attached base material Y6; the solid polymer electrolyte membrane 10 was used in place of the solid polymer electrolyte membrane 1; and the removable base material 3 was used in place of the **removable** base material 1.

In the column "Total film thickness (μm)" of Table 1, indicated is the total thickness of the films in the film-attached base material used for each Ex. For example, for Ex. 1 in which two film-attached base materials Y1 were used, the total thickness of two films each 30 μm in thickness, that is, 60 μm is given in Table 1.

In the column "Presence" under the heading "Woven fabric" of Table 1, it is indicated whether the woven fabric was included or not in the solid polymer electrolyte membrane, where "present" means that the woven fabric was included; and "not present" means that no woven fabric was included.

In the column "Type" under the heading "Removable base material" of Table 1, the type of the removable base material used in each Ex is indicated, where the ordinal numbers "1" to "4" respectively mean the removable base materials 1 to 4.

In Ex. 11, the unwinding stability was evaluated as "×", and thus, the adhesion was not evaluated and indicated as "-".

Table 1

| | Film | Base material | Film-attached base material | | Ion exchange capacity (meg/g dry resin) of fluorinated polymer | Woven fabric | | | | | | |
|---|---|---|---|---|---|---|---|---|---|---|---|---|
| | Type | Type | Type | Total film thickness (μm) | | Presence | Type | Fabric weight ($g/m^2$) | Denier count (g/9000m) | Density (yarns/inch) | Material | Aperture ratio (%) |
| Ex. 1 | α1 | LLDPE | Y1 | 60 | 1.25 | Present | A1 | 16.3 | 18.6 | 100 | PFA | 74.3 |
| Ex. 2 | α1 | LLDPE | Y1 | 60 | 1.25 | Present | A1 | 16.3 | 18.6 | 100 | PFA | 74.3 |
| Ex. 3 | α1 | LLDPE | Y1 | 60 | 1.25 | Present | A1 | 16.3 | 18.6 | 100 | PFA | 74.3 |
| Ex. 4 | α1 | LLDPE | Y1 | 60 | 1.25 | Present | A2 | 39.2 | 49.8 | 90 | PTFE | 63.7 |
| Ex. 5 | α2 | PET | Y2 | 120 | 1.25 | Present | A1 | 16.3 | 18.6 | 100 | PFA | 74.3 |
| Ex. 6 | α2 | PET | Y2 | 120 | 1.25 | Present | A2 | 39.2 | 49.8 | 90 | PTFE | 63.7 |
| Ex. 7 | α3 | PET | Y3 | 120 | 1.0 | Present | A1 | 16.3 | 18.6 | 100 | PFA | 74.3 |
| Ex. 8 | α4 | PET | Y4 | 160 | 1.0 | Present | A2 | 39.2 | 49.8 | 90 | PTFE | 63.7 |
| Ex. 9 | α5 | PET | Y5 | 230 | 1.0 | Present | A2 | 39.2 | 49.8 | 90 | PTFE | 63.7 |
| Ex. 10 | α2 | PET | Y2 | 120 | 1.25 | Present | A1 | 16.3 | 18.6 | 100 | PFA | 74.3 |
| Ex. 11 | α6 | PET | Y6 | 130 | 1.25 | Not present | - | - | - | - | - | - |

Table 1 (continued)

| | Releasing layer | $TA_{AVE}$ (μm) | $TB_{AVE}$ (μm) | $(TA_{AVE} - TB_{AVE})/2$ (μm) | Type of removable base material | Adhesion | Unwinding test | |
|---|---|---|---|---|---|---|---|---|
| | | | | | | | Wound with solid polymer electrolyte membrane outside removable base material | Wound with solid polymer electrolyte membrane inside removable base material |
| Ex. 1 | LDPE | 91 | 60 | 15.5 | Base material 1 | ○ | ○ | ○ |
| Ex. 2 | LLDPE | 91 | 60 | 15.5 | Base material 2 | ○ | ○ | ○ |
| Ex. 3 | LLDPE | 91 | 60 | 15.5 | Base material 3 | ○ | ○ | ○ |
| Ex. 4 | LLDPE | 113 | 61 | 26.0 | Base material 3 | ○ | ○ | ○ |
| Ex. 5 | LLDPE | 134 | 130 | 2.0 | Base material 3 | ○ | ○ | ○ |
| Ex. 6 | LLDPE | 150 | 147 | 1.5 | Base material 3 | ○ | ○ | ○ |
| Ex. 7 | LLDPE | 130 | 128 | 1.0 | Base material 3 | ○ | ○ | ○ |
| Ex. 8 | LLDPE | 219 | 216 | 1.5 | Base material 3 | ○ | ○ | ○ |
| Ex. 9 | LLDPE | 297 | 296 | 0.5 | Base material 3 | ○ | ○ | ○ |
| Ex. 10 | LLDPE | 134 | 130 | 2.0 | Base material 4 | ○ | ○ | ○ |
| Ex. 11 | LLDPE | 80 | 80 | 0.0 | Base material 3 | - | × | × |

As shown in Table 1, it was confirmed that the laminate of the present invention achieves a desired effect.

The entire disclosure of Japanese Patent Application No. 2022-115790 filed on July 20, 2022 including specification, claims, drawings and summary is incorporated herein by reference in its entirety.

REFERENCE SYMBOLS

| | |
|---|---|
| 10: | Laminate |
| 12: | Removable base material |
| 14: | Solid polymer electrolyte membrane |
| 16: | Support |
| 18: | Releasing layer |
| 19: | Unwinding stability improving layer |
| 20: | Electrolyte |
| 22: | Woven fabric |
| 22a, 22b, 22c: | Yarn B |
| 22A, 22B, 22C: | Yarn A |

## Claims

1. A laminate, comprising:

   a removable base material having a support and a releasing layer; and
   a solid polymer electrolyte membrane arranged on the releasing layer of the removable base material,
   wherein the solid polymer electrolyte membrane comprises a fluorinated polymer having ion exchange groups and a woven fabric.

2. The laminate according to Claim 1, wherein the ion exchange capacity of the fluorinated polymer is 0.90 to 2.00 meq/g dry resin.

3. The laminate according to Claim 1 or 2, wherein:

   the woven fabric comprises yarns A extending in one direction and yarns B extending in a direction substantially orthogonal to the yarns A; and
   the aperture ratio of the woven fabric is at least 50%.

4. The laminate according to Claim 3, wherein the denier count of the yarns A and the denier count of the yarns B are each independently 15 to 50.

5. The laminate according to Claim 3, wherein the yarns A and the yarns B are each independently made of at least one material selected from the group consisting of polytetrafluoroethylene, a tetrafluoroethylene-perfluoroalkyl vinyl ether copolymer, polyether ether ketone and polyphenylene sulfide.

6. The laminate according to Claim 3, wherein the densities of the yarns A and the yarns B are each independently 70 to 150 yarns/inch.

7. The laminate according to Claim 1 or 2, wherein the ion exchange groups are sulfonic acid functional groups.

8. The laminate according to Claim 1 or 2, wherein the fluorinated polymer comprises units based on a fluorinated olefin and units having sulfonic acid functional groups and fluorine atoms.

9. The laminate according to Claim 8, wherein the fluorinated olefin is a $C_{2-3}$ fluoroolefin having at least one fluorine atom in the molecule.

10. The laminate according to Claim 8, wherein the units having sulfonic acid functional groups and fluorine atoms are units represented by the formula (1):

    Formula (1): $-[CF_2-CF(-L-(SO_3M)_n)]-$

    where L is an n+1-valent perfluorohydrocarbon group which may contain an etheric oxygen atom; M is a hydrogen atom, an alkali metal or a quaternary ammonium cation; and n is 1 or 2.

11. The laminate according to Claim 1 or 2, wherein the elastic modulus of the support at 160°C is higher than the elastic modulus of the releasing layer at 160°C.

12. The laminate according to Claim 1 or 2, wherein the elastic modulus of the releasing layer at 160°C is at most 1 MPa.

13. The laminate according to Claim 1 or 2, wherein:

    the woven fabric comprises yarns A extending in one direction and yarns B extending in a direction substantially orthogonal to the yarns A; and
    the average maximum membrane thickness $TA_{AVE}$ and the average minimum membrane thickness $TB_{AVE}$ of the solid polymer electrolyte membrane satisfy the relationship of the following formula (X):

    Formula (X): $0.5\ \mu m \le (TA_{AVE} - TB_{AVE})/2$

where, when the maximum membrane thickness TA and the minimum membrane thickness TB of the solid polymer electrolyte membrane are measured for each of ten different cross sections of the solid polymer electrolyte membrane as taken in a direction parallel to the direction in which the yarns A in the solid polymer electrolyte membrane extend and at a midpoint between the yarns A, and

when the maximum membrane thickness TA and the minimum membrane thickness TB of the solid polymer electrolyte membrane are measured for each of ten different cross sections of the solid polymer electrolyte membrane as taken in a direction parallel to the direction in which the yarns B in the solid polymer electrolyte membrane extend and at a midpoint between the yarns B, and

the average maximum membrane thickness $TA_{AVE}$ is the arithmetically average of the twenty measured values of TA, and the average minimum membrane thickness $TB_{AVE}$ is the arithmetic average of the twenty measured values of TB.

**14.** A roll body obtained by winding a laminate as defined in Claim 1 or 2.

Fig. 1

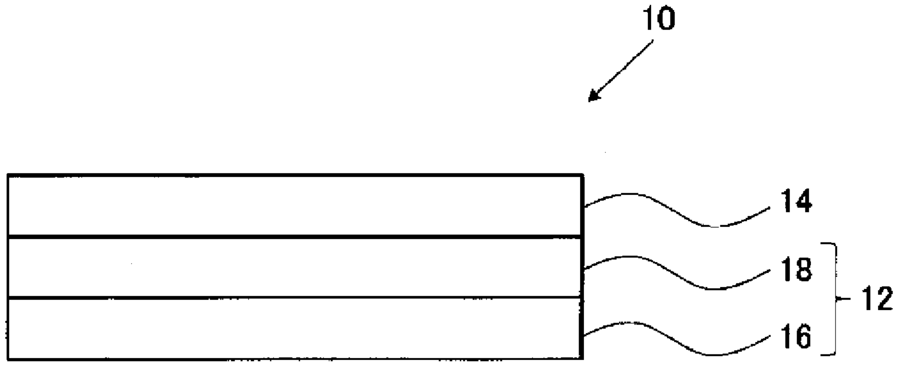


Fig. 2

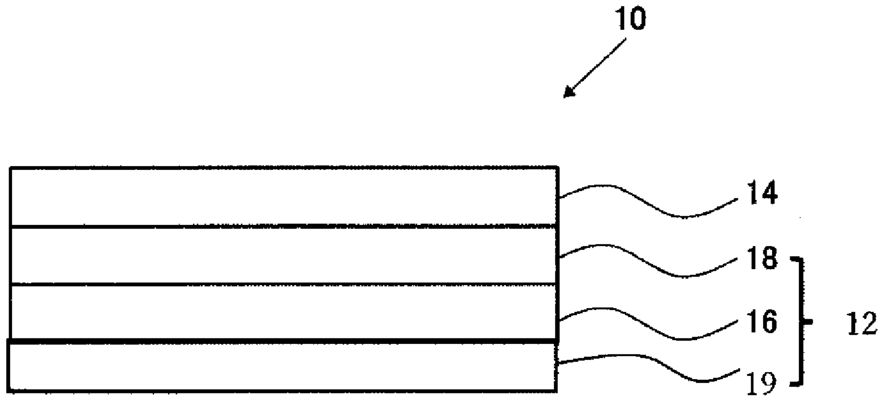


Fig. 3

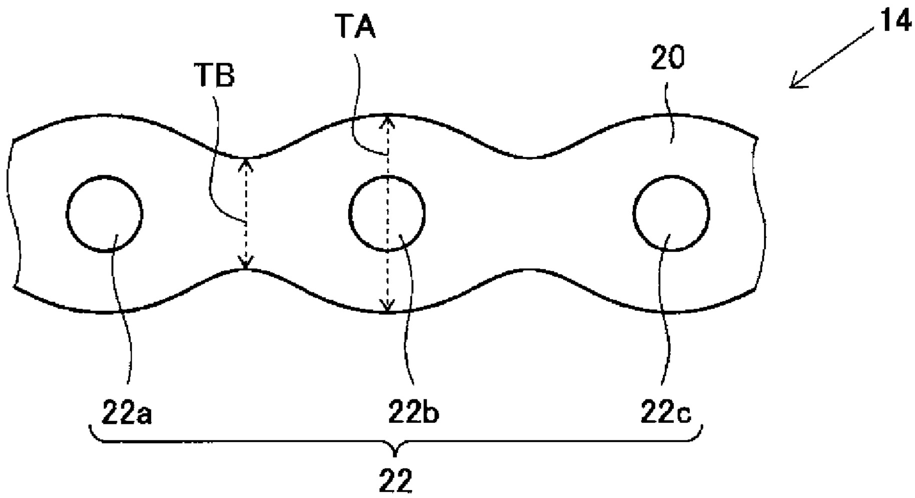

Fig. 4

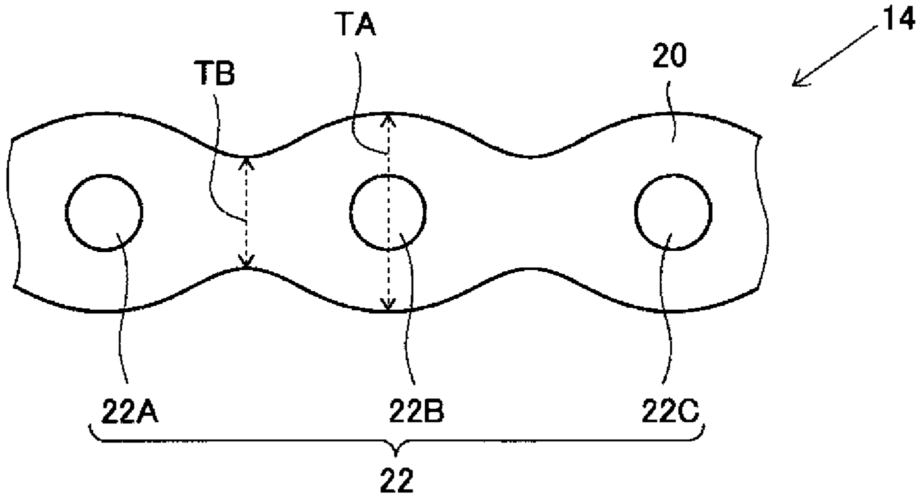


Fig. 5

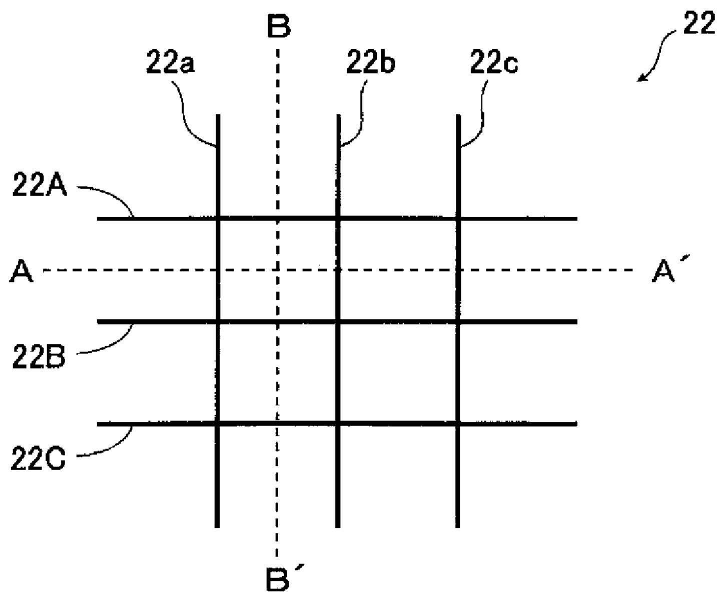

**INTERNATIONAL SEARCH REPORT**

International application No.
**PCT/JP2023/025700**

**A. CLASSIFICATION OF SUBJECT MATTER**

***H01M 8/1062***(2016.01)i; ***H01M 8/10***(2016.01)i; ***H01M 8/1025***(2016.01)i; ***H01M 8/1039***(2016.01)i; ***H01M 8/1041***(2016.01)i; ***H01M 8/106***(2016.01)i; *B32B 5/02*(2006.01)n; *B32B 5/28*(2006.01)n; *B32B 7/022*(2019.01)n; *B32B 7/06*(2019.01)n; *B32B 27/00*(2006.01)n; *B32B 27/30*(2006.01)n
FI: H01M8/1062; H01M8/1025; H01M8/1039; H01M8/1041; H01M8/106; H01M8/10 101; B32B5/02; B32B5/28 Z; B32B7/022; B32B7/06; B32B27/00 L; B32B27/30 D

According to International Patent Classification (IPC) or to both national classification and IPC

**B. FIELDS SEARCHED**

Minimum documentation searched (classification system followed by classification symbols)

H01M8/1062; H01M8/10; H01M8/1025; H01M8/1039; H01M8/1041; H01M8/106; B32B5/02; B32B5/28; B32B7/022; B32B7/06; B32B27/00; B32B27/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/088299 A1 (AGC INC.) 09 May 2019 (2019-05-09) | 1-14 |
| A | JP 2011-222499 A (TORAY IND., INC.) 04 November 2011 (2011-11-04) claims 3, 8, paragraphs [0168]-[0171] | 1-14 |
| A | JP 2019-114504 A (ASAHI KASEI CORP.) 11 July 2019 (2019-07-11) paragraphs [0050]-[0056], fig. 3 | 1-14 |
| A | WO 2015/059848 A1 (PANASONIC INTELLECTUAL PROPERTY MANAGEMENT CO., LTD.) 30 April 2015 (2015-04-30) claim 11, paragraphs [0042], [0054]-[0058], fig. 3 | 1-14 |
| A | JP 2021-152991 A (TOYOTA MOTOR CORP.) 30 September 2021 (2021-09-30) paragraph [0016], fig. 2 | 1-14 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 September 2023** | **12 September 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/025700**

| Patent document cited in search report | Publication date (day/month/year) | Patent family member(s) | Publication date (day/month/year) |
|---|---|---|---|
| WO 2019/088299 A1 | 09 May 2019 | US 2020/0259196 A1<br>EP 3709314 A1<br>CN 111316380 A | |
| JP 2011-222499 A | 04 November 2011 | (Family: none) | |
| JP 2019-114504 A | 11 July 2019 | (Family: none) | |
| WO 2015/059848 A1 | 30 April 2015 | US 2016/0028100 A1<br>claim 11, paragraphs [0051], [0063]-[0067], fig. 3<br>EP 2942831 A1<br>CN 104854745 A<br>KR 10-2015-0086305 A | |
| JP 2021-152991 A | 30 September 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020107430 A
- JP 2022115790 A